# EUROPÄISCHE PATENTSCHRIFT

(11) **EP 0 939 259 B1**
(45) Veröffentlichungstag und Bekanntmachung des Hinweises auf die Patenterteilung: **19.05.2004**
(21) Anmeldenummer: 99103362.2
(22) Anmeldetag: 20.02.1999
(51) Int. Cl.: F16K 31/06, F16K 27/00

(54) **Magnetventil**
Electromagnetic valve
Vanne électromagnétique

(30) Priorität: 27.02.1998 DE 19808279
(43) Veröffentlichungstag der Anmeldung: 01.09.1999
(73) Patentinhaber: Hydraulik-Ring GmbH, 09212 Limbach-Oberfrohna (DE)
(72) Erfinder: Meyer, Roland, 91154 Roth (DE); Trzmiel, Alfred, 72661 Grafenberg (DE)
(74) Vertreter: Kohl, Karl-Heinz, Dipl.-Ing.

(56) Entgegenhaltungen:
- US-A- 4 655 254
- US-A- 5 605 178
- US-A- 5 690 064

## Beschreibung

Die Erfindung betrifft eine Magnetventilanordnung nach dem Oberbegriff des Anspruches 1.

Magnetventilanordnungen haben Magnetventile, bei denen der Ventilund der Magnetteil getrennte Bauteile sind, die zu einer Einheit zusammengebaut werden. Der Magnetteil weist einen Stößel auf, auf dem ein Anker sitzt. Der Stößel ist nahe seiner beiden Enden in jeweils einem Lager geführt und taucht in ein Joch ein, das an dem dem Ventilteil zugewandten Ende über eine Dichtung abgedichtet in der Spule liegt. An ihrem unteren Ende ist die Spule über eine weitere Dichtung gegenüber einem Rückschlußteil des Ventilteiles abgedichtet. Der Rückschlußteil ist seinerseits über eine weitere Dichtung gegenüber einem Gehäuse des Magnetteiles abgedichtet. Schließlich liegt zwischen einem Steckerteil des Magnetteiles und dem Magnetteil-Gehäuse eine weitere Dichtung. Aufgrund der Vielzahl von Dichtungen sowie der Lager für den Stößel hat das Magnetventil einen aufwendigen Aufbau und ist dementsprechend teuer ausgebildet. Durch die Vielzahl der Dichtungen ist das Magnetventil relativ groß; auch seine Montage ist aufwendig und teuer. Schließlich besteht das Magnetteil-Gehäuse aus Metall und muß daher außenseitig zur Vermeidung von Korrosion verzinkt werden. Diese Korrosionsbehandlung erfordert zusätzliche Arbeitsschritte und verteuert daher die Herstellung des Magnetventiles.

Bei der gattungsgemäßen Magnetventilanordnung (US 4 655 254 A) ist das Magnetteil-Gehäuse an seiner dem Ventilteil zugewandten Seite mit einem Absatz versehen, in den eine Ringdichtung eingelegt ist. Sie kann während der Lagerung und/oder des Transportes des Magnetventiles leicht verloren gehen. Am freien Ende des Magnetteiles befindet sich ein Anschluß, der in eine Kunststoffmasse eingebettet ist. Dadurch ist die Herstellung des Steckers als Spritzgußteil aufwendig und kostspielig, zumal der Anschluß in der Spritzgußform positioniert werden muß.

Bei einem anderen bekannten Magnetventil (US 5 690 064 A) sind das Ventilteil- und das Magnetteil-Gehäuse durch eine Buchse zu einer Einheit zusammengefügt. Auf dem Stößel sitzt ein Anker, der zwischen zwei Spulen gegen die Kraft jeweils einer Druckfeder axial hin- und herbewegt werden kann.

Es ist schließlich ein Magnetventil bekannt (US 5 605 178 A), bei dem das Magnetteil-Gehäuse mit Befestigungsschrauben am Funktionsträger befestigt ist. In der Auflageseite des Ventilteil-Gehäuses befindet sich eine Ringnut, in der sich eine Ringdichtung befindet. Sie kann während der Lagerung und/oder des Transportes des Magnetventiles verloren gehen.

Der Erfindung liegt die Aufgabe zugrunde, die gattungsgemäße Magnetventilanordnung so auszubilden, daß sie aus nur wenigen Bauteilen besteht und mit geringen Kosten und geringem Montageaufwand bei geringer Baugröße hergestellt werden kann.

Diese Aufgabe wird bei der gattungsgemäßen Magnetventilanordnung erfindungsgemäß mit den kennzeichnenden Merkmalen des Anspruches 1 gelöst.

Bei der erfindungsgemäßen Magnetventilanordnung liegt die Dichtung in der Vertiefung des Funktionsträgers. Die Dichtung gewährleistet eine einwandfreie Abdichtung und läßt sich problemlos in die Vertiefung einlegen. Durch diese Dichtung können sämtliche Dichtungen zur Abdichtung des Rückstellteiles, der Spule und des Joches entfallen. Durch die Anordnung der zweiten Dichtung zwischen dem Magnetteil-Gehäuse und dem Anschlußpin können weitere Dichtungen zur Abdichtung des Steckerteiles gegenüber dem Magnetteil-Gehäuse entfallen. Als Dichtung kann beispielsweise ein einfacher O-Ring verwendet werden. Aufgrund der erfindungsgemäßen Ausbildung zeichnet sich die Magnetventilanordnung dadurch aus, daß sie aus nur wenigen Bauteilen besteht und kostengünstig hergestellt werden kann. Insbesondere ist nur ein geringer Montageaufwand notwendig.

Bei einer vorteilhaften Ausbildung entsprechend Anspruch 7 kann für den Anschlußpin ein kostengünstiges Bauteil verwendet werden. Durch die Verquetschung erhält der Steckabschnitt den erforderlichen rechteckigen Querschnitt. Der übrige Teil des Anschlußpins behält seine runde Querschnittsform, so daß in diesem Bereich zur Abdichtung des Anschlußpins ein herkömmlicher, preisgünstiger O-Ring eingesetzt werden kann.

Durch die Führung des Ankers im Ventilteil-Gehäuse gemäß Anspruch 8 können teure Lager für den Stößel entfallen.

Durch die Einsparung einer Vielzahl von Dichtungen und Lagern ist die erfindungsgemäße Magnetventilanordnung konstruktiv sehr einfach aufgebaut. Außerdem hat sie nur eine relativ geringe Baugröße und kann daher außerordentlich klein gehalten werden. Dadurch eignet sich die erfindungsgemäße Magnetventilanordnung hervorragend für den Einsatz in Systembaukästen, bei denen mehrere Magnetventile gemeinsam vorgesehen sind.

Weitere Merkmale der Erfindung ergeben sich aus den weiteren Ansprüchen, der Beschreibung und den Zeichnungen.

Die Erfindung wird nachstehend anhand zweier in den Zeichnungen dargestellter Ausführungsbeispiele näher beschrieben.

Es zeigt:
- Fig. 1: ein erfindungsgemäßes Magnetventil, das an einem Funktionsträger vorgesehen ist, im Axialschnitt,
- Fig. 2: mehrere nebeneinander angeordnete Magnetventile, die an einem gemeinsamen Funktionsträger vorgesehen und in einem gemeinsamen Gehäuse untergebracht sind, in einer Darstellung entsprechend Fig. 1.

Das Magnetventil 1 ist an einem Funktionsträger 2, beispielsweise in einem Motorblock oder dgl., vorgesehen und weist ein Magnetteil 3 und ein Ventilteil 4 auf. Das Magnetteil 3 hat in bekannter Weise ein Gehäuse 5, in dem ein von einer Spule 6 umgebenes Joch 7 angeordnet ist, in dem ein Anker 8 axial verschiebbar ist. Die Spule 6 hat einen napfförmigen Spulenkörper 11 mit einem Boden 9 und einem zylindrischen Maniel 10, in dem eine Wicklung 12 angeordnet ist. Von ihr führen in bekannter Weise Drähte 13 zu einem Anschlußpin 14, der durch einen Boden 15 des napfförmigen Magnetteilgehäuses 5 ragt. Vom Boden 15 steht ein zylindrisches Steckerteil 18 ab, in das der Anschlußpin 14 mit einem verjüngten Abschnitt 19 ragt. Im Gehäuseboden 15 ist eine Durchgangsöffnung 20 vorgesehen, durch die der Anschlußpin 14 mit einem im Querschnitt runden Halteteil 22 ragt. Der Anschlußpin 14 ist mit den Drähten 13 der Wicklung 12 und mit Kontaktteilen 17 elektrisch leitend verbunden. Das freie Ende 23 des Halteteiles 22 ist verdickt ausgebildet und liegt an einer Dichtung 24 an, die in einer innenseitigen Vertiefung 25 des Gehäusebodens 15 liegt, in die die Durchgangsöffnung 20 mündet. Vorzugsweise ist die Dichtung 24 ein einfacher O-Ring, der den Halteteil 22 umgibt. Über die Verdickung 23 wird der Dichtungsring 24 radial und axial in der Vertiefung 25 verspannt. Durch den im Querschnitt runden Halteteil 22 kann der Anschlußpin 14 mit der einfachen Ringdichtung 24 nach außen abgedichtet werden.

Der Anschlußpin 14 wird aus einem im Querschnitt runden Stift hergestellt, der an einem Ende zur Bildung des Steckabschnittes 19 verquetscht wird.

Die Kontaktteile 17 sind im Boden 9 des Spulenkörpers 11 verankert. Das Joch 7 liegt an der Innenwand des Spulenkörpermantels 10 an. Der Anker 8 liegt an der Innenwand des zylindrischen Teiles 21 des Joches 7 an und sitzt auf einem Stößel 28, der axial fest mit einem Kolben 27 des Ventilteiles 4 verbunden, vorzugsweise einstückig mit ihm ausgebildet ist. Der Ventilteil 4 weist wie der Magnetteil 3 ein Gehäuse 26 auf, in dem der Kolben 27 gegen die Kraft einer Feder 29 axial verschiebbar geführt ist. Da der Anker 8 über den Kolben 27 im Ventilteilgehäuse 26 geführt ist, ist eine zusätzliche Führung für den Anker 8 im Magnetteilgehäuse 5 nicht erforderlich. Dies wirkt sich vorteilhaft auf die Herstellungskosten des Magnetventiles sowie deren Montage und Baugröße aus.

Der Kolben 27 besteht aus unmagnetischem Werkstoff, vorzugsweise aus Metall. Das Ventilteilgehäuse 26 ist einstückig mit einem konischen Rückschlußteil 30 ausgebildet, das in den Spulenkörpermantel 10 eingreift und mit Abstand vom Joch 7 bzw. dessen zylindrischen Teil 21 endet. Der Anker 8 ragt mit geringem radialen Spiel in das Rückschlußteil 30. Infolge der einteiligen Ausbildung von Ventilgehäuse 26 und Rückschlußteil 30 ist das Magnetventil konstruktiv einfach ausgebildet.

Vorteilhaft auf die Herstellungskosten des Magnetventiles wirkt sich auch aus, daß das Magnetteilgehäuse 5 aus Kunststoff besteht. Dadurch entfällt eine im Vergleich zu einem Metallgehäuse erforderliche Korrosionsbehandlung. Der Kunststoff des Magnetteilgehäuses 5 ist korrosionsfest und bereitet daher im Einsatz des Magnetventiles keine Probleme.

Das Magnetventil 1 ist gegenüber dem Funktionsträger 2 durch eine Dichtung 31 einwandfrei abgedichtet. Sie ist in einer nach außen offenen Vertiefung 32 des Funktionsträgers angeordnet, die konzentrisch zum Ventilgehäuse 26 liegt. Die Dichtung 31 ist vorzugsweise ein O-Ring, der an einem radial nach außen ragenden Flansch 33 des Magnetgehäuses 5 anliegt. Über den Flansch 33 ist das Magnetteilgehäuse 5 mit (nicht dargestellten) Befestigungsteilen, vorzugsweise Schrauben, am Funktionsträger 2 befestigt. Beim Anschrauben des Magnetteilgehäuses 5 an den Funktionsträger 2 wird die Dichtung 31 elastisch zusammengedrückt. Im Magnetteilgehäuse 5 ist ein zylindrisches Rückschlußteil 34 angeordnet, vorzugsweise umspritzt. Es hat am ventilteilseitigen Ende einen radial nach außen ragenden Flansch 35, der im Flansch 33 des Magnetteiles 5 liegt. Am anderen Ende weist das Rückschlußteil 34 einen radial nach innen ragenden Ringflansch 35' auf, der in den Gehäuseboden 15 eingebettet ist. Das Rückschlußteil 34 stellt den Rückschluß des Magnetfeldes des Magnetteiles 3 her. Die in entgegengesetzte Richtungen verlaufende Flansche 35 und 35' des Rückschlußteiles 34 sind dann vorteilhaft, wenn das Magnetventil bei sehr hohen Drücken eingesetzt wird. Die Flansche 35, 35' stellen dann einen sicheren Halt des Rückschlußteiles 34 im Magnetteilgehäuse 5 sicher. Sind die Drücke geringer, reicht ein einfaches zylindrisches Rohrstück als Rückschlußteil 34 aus.

Das Ventilteil 4 hat einen Druckanschluß P und einen Tankanschluß T. Die beiden Anschlüsse P, T werden durch den Kolben 27 geöffnet oder geschlossen.

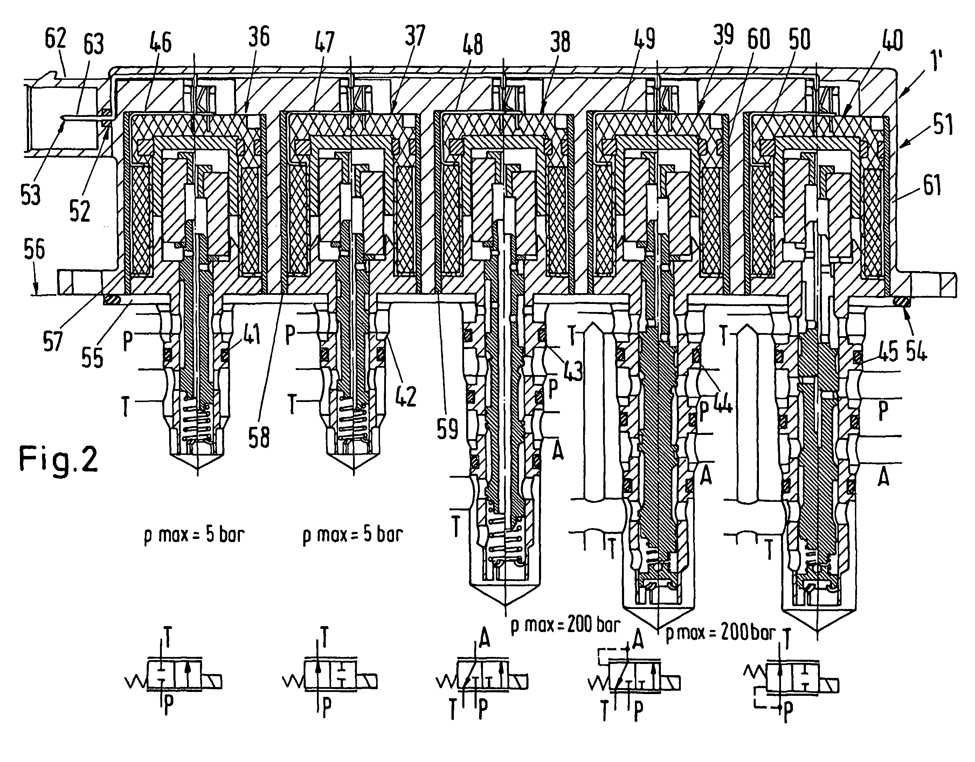

Die beiden Dichtungen 24, 31 reichen aus, um das Magnetventil einwandfrei abzudichten. Da beide Dichtungen durch einfache O-Ringe gebildet sein können, hat das Magnetventil einen konstruktiv sehr einfachen Aufbau. Außerdem hat es nur eine geringe Baugröße, so daß es sich besonders gut zur Verwendung in einem Systembaukasten eignet, der in Fig. 2 beispielhaft dargestellt ist. Er ist aus mehreren Magnetventilen zusammengesetzt.

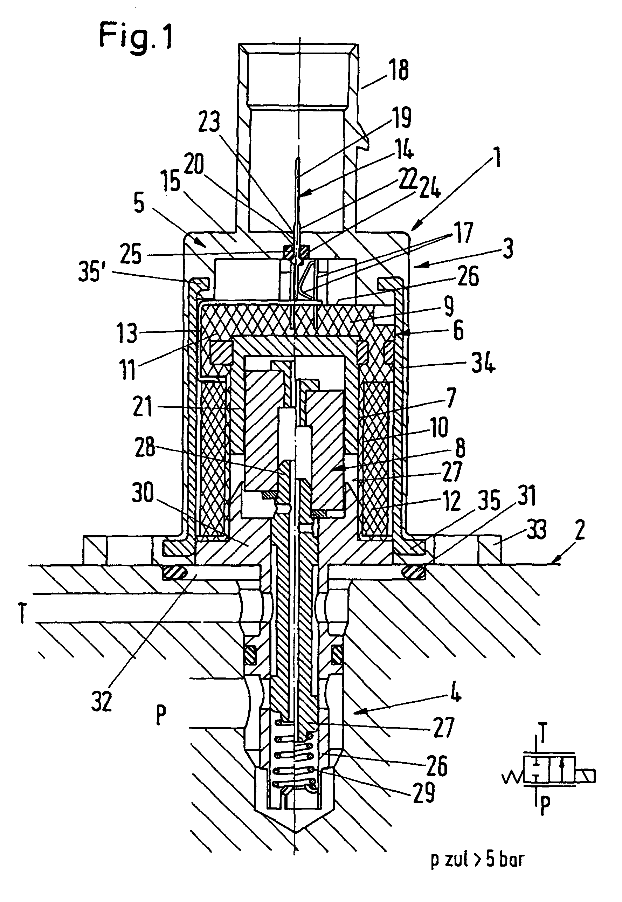

Bei der Ausführungsform nach Fig. 2 sind fünf Magnetventile 36 bis 40 vorgesehen, die im wesentlichen gleich ausgebildet sind wie das zuvor beschriebene Magnetventil 1. Lediglich ihre Ventilteile 41 bis 45 sind im Hinblick auf die gewünschte Hydraulikfunktion unterschiedlich. Die Ventilteile 41, 42 und 45 haben jeweils einen Druckanschluß P und einen Tankanschluß T, während die Ventilteile 43, 44 zusätzlich einen Arbeitsanschluß A haben. Die Magnetteile 46 bis 50 sind gleich ausgebildet. Sämtliche Magnetventile 36 bis 40 haben gemeinsam ein Magnetteilgehäuse 51. Es besteht wie das Magnetteilgehäuse 5 vorteilhaft aus Kunststoff. Zur Abdichtung der Magnetventile 36 bis 40 sind wiederum nur zwei Dichtungen vorgesehen, nämlich die Dichtung 52, die den Anschlußpin 53 abdichtet, sowie die Dichtung 54, die in einer Vertiefung 55 des Funktionsträgers 56 liegt. Beide Dichtungen 52 und 54 sind wiederum als einfache O-Ringe ausgebildet. Jedes Magnetventil 36 bis 40 weist ein zylindrisches Rückschlußteil 57 bis 61 auf, das in das Gehäuse 51 eingebettet ist. Die Rückschlußteile 57 bis 61 sind jeweils gleich ausgebildet. Sie sind entsprechend ausgebildet wie das Rückschlußteil 34 gemäß Fig. 1, jedoch ohne die nach außen bzw. innen abgewinkelten Flansche 35 und 35'. Der Anschlußpin 53 ist wie der Anschlußpin 14 mit einem (nicht näher dargestellten) im Querschnitt runden Halteteil und einem im Querschnitt rechteckigen und in ein Steckerteil 62 der Magnetventile 36 bis 40 ragenden Pinabschnitt 63 versehen.

Die Magnetventile 36 bis 40 müssen nicht, wie in Fig. 2 dargestellt, unterschiedlich hinsichtlich ihrer Abmessungen ausgebildet sein. Sie können auch alle gleich oder nur zum Teil gleich ausgebildet sein. Außerdem kann bei einem Magnetventil im Systembau auch die Anzahl der Magnetventile variieren.

Mit den Magnetventilen kann ein Druckbereich von beispielsweise 5 bar bis beispielsweise 200 bar abgedeckt werden, und zwar in den verschiedensten hydraulischen Funktionsmerkmalen. Da für die verschiedenen Magnetventile nicht jeweils ein einziges Gehäuse vorgesehen ist, sondern das gemeinsame Gehäuse 51, können die Magnetventile sehr eng nebeneinander gesetzt werden, so daß auch das gesamte System nur wenig Einbauraum benötigt.

Die aus Eisen bestehenden Rückschlußteile 57 bis 61 können deshalb durch einfache zylindrische Rohrstücke gebildet sein, da in der Kombination der einzelnen Magnetventile 36 bis 40 auch bei hohen Drücken das Magnetteilgehäuse 51 ausreichend stabil ausgebildet ist.

## Patentansprüche

1. Magnetventilanordnung mit einem Ventilteil (4; 41 bis 45) und einem Magnetteil (3; 46 bis 50), der einen Stößel (28) aufweist, der in einem Magnetteil-Gehäuse (5; 51) liegt und mit einem Kolben (27) verbunden ist, der in einem Ventilteil-Gehäuse (26) angeordnet ist, das mit einem Funktionsträger (2; 56) verbunden ist, an dem das Magnetteil-Gehäuse (5; 51) befestigt ist, das wenigstens einen Anschluß (14; 53) aufweist, der mit einer Wicklung (12) einer Spule (6) des Magnetteiles (3; 46 bis 50) leitungsverbunden ist, und mit wenigstens einer zwischen dem Funktionsträger (2; 56) und dem Magnetteil (3; 46 bis 50) liegenden Dichtung (31; 54),
**dadurch gekennzeichnet, daß** die Dichtung (31; 54) in einer Vertiefung (32; 55) des Funktionsträgers (2; 56) liegt, und daß der Anschluß ein Anschlußpin (14; 53) ist, der mit einer zweiten Dichtung (24; 52) gegenüber dem Magnetteil-Gehäuse (5; 51) abgedichtet ist und in ein Steckerteil (18) des Magnetteil-Gehäuses (5; 51) ragt.

2. Magnetventilanordnung nach Anspruch 1,
**dadurch gekennzeichnet, daß** die Dichtung (31; 54) in der Vertiefung (32; 55) des Funktionsträgers (2; 56) an einem Flansch (33) des Magnetteil-Gehäuses (5; 51) anliegt, mit dem dieses auf dem Funktionsträger (2; 56) befestigt ist.

3. Magnetventilanordnung nach Anspruch 1 oder 2,
**dadurch gekennzeichnet, daß** der Anschlußpin (14; 52) im Magnetteil-Gehäuse (5; 51) mit einem im Querschnitt runden Halteteil (22) angeordnet ist, und daß vorteilhaft die zweite Dichtung (24; 52) den Halteteil (22) des Anschlußpins (14; 53) dichtend umgibt.

4. Magnetventilanordnung nach einem der Ansprüche 1 bis 3,
**dadurch gekennzeichnet, daß** der übrige, in den Steckerteil (18; 62) ragende, einen Steckabschnitt bildende Pinteil (19; 63) unrunden, vorzugsweise rechteckigen Querschnitt aufweist.

5. Magnetventilanordnung nach einem der Ansprüche 1 bis 4,
**dadurch gekennzeichnet, daß** die zweite Dichtung (24; 52) durch einen O-Ring gebildet ist und vorzugsweise im Magnetteil-Gehäuse (5; 51) axial und radial verspannt ist.

6. Magnetventilanordnung nach einem der Ansprüche 1 bis 5,
**dadurch gekennzeichnet, daß** die zweite Dichtung (24; 52) über eine Verdickung (23) des Anschlußpins (14; 53) unter Verspannung in einer Ausnehmung (25) des Magnetteil-Gehäuses (5; 51) liegt.

7. Magnetventilanordnung nach einem der Ansprüche 1 bis 6,
**dadurch gekennzeichnet, daß** der Anschlußpin (14; 53) durch einen im Querschnitt runden Stift gebildet ist, dessen eines Ende zur Bildung des Steckabschnittes (19; 63) verquetscht ist.

8. Magnetventilanordnung nach einem der Ansprüche 1 bis 7,
**dadurch gekennzeichnet, daß** auf dem Stößel (28) ein Anker (8) angeordnet ist, der mittels des Kolbens (27) im Ventilteil-Gehäuse (26) geführt ist.

9. Magnetventilanordnung nach einem der Ansprüche 1 bis 8,
**dadurch gekennzeichnet, daß** der Stößel (28) und der Kolben (27) einstückig miteinander ausgebildet sind.

10. Magnetventilanordnung nach einem der Ansprüche 1 bis 9,
**dadurch gekennzeichnet, daß** der Kolben (27) und/oder der Stößel (28) aus nichtmagnetischem, vorzugsweise metallischem Werkstoff und das Magnetteil-Gehäuse (5; 51) vorzugsweise aus Kunststoff bestehen.

11. Magnetventilanordnung nach einem der Ansprüche 1 bis 10,
**dadurch gekennzeichnet, daß** das Ventilteil-Gehäuse (26) einstückig mit einer Verbreiterung (30) ausgebildet ist, die in das Magnetteil-Gehäuse (5; 51) ragt.

12. Magnetventilanordnung nach einem der Ansprüche 1 bis 11,
**dadurch gekennzeichnet, daß** im Magnetteil-Gehäuse (5; 51) mindestens ein Rückschlußteil (34; 57 bis 61) vorgesehen, vorzugsweise eingebettet ist.

13. Magnetventilanordnung nach Anspruch 12,
**dadurch gekennzeichnet, daß** das Rückschlußteil (34; 57 bis 61) im wesentlichen zylindrisch ausgebildet ist und vorteilhaft an seinen Enden in entgegengesetzte Richtungen weisende Flansche (35; 35') aufweist.

14. Magnetventilanordnung nach einem der Ansprüche 1 bis 13,
**dadurch gekennzeichnet, daß** im Magnetteil-Gehäuse (51) mehrere, vorzugsweise jeweils ein Rückschlußteil (57 bis 61) aufweisende Magnetventile (36 bis 40) untergebracht sind.

15. Magnetventilanordnung nach Anspruch 14,
**dadurch gekennzeichnet, daß** alle Rückschlußteile (57 bis 61) in das Magnetteil-Gehäuse (51) eingebettet sind.

## Claims

1. Electromagnetic valve device with a valve means (4; 41 to 45) and a magnetic means (3; 46 to 50), which comprises a pestle (28) which is situated within a magnetic means body (5; 51) and is connected with a piston (27) which is disposed within a valve means body (26) which is connected with a function carrier (2; 56), at which the magnetic means body (5; 51) is fixed, which comprises at least one port (14; 53) which is conductively connected with a winding (12) of a solenoid (6) of the magnetic means (3; 46 to 50) and with at least one sealing (31; 54), positioned between the function carrier (2; 56) and the magnetic means (3; 46 to 50),
**characterized in that** the sealing (31; 54) is situated within a deepening (32; 55) of function carrier (2; 56) and that the port is a contact pin (14; 53) which is sealed with a second sealing (24; 52) with respect to the magnetic means body (5; 51) and projects in a socket means (18) of the magnetic means body (5; 51).

2. Electromagnetic valve device according to Claim 1,
**characterized in that** the sealing (31; 54) within the deepening (32; 55) of the function carrier (2; 56) abuts to a flange (33) of the magnetic means body (5; 51) with which this is fixed on the function carrier (2; 56).

3. Electromagnetic valve device according to Claim 1 or 2,
**characterized in that** the contact pin (14; 53) within the magnetic means body (5; 51) is provided with a holding means (22) round in cross-section and that advantageously the second sealing (24; 52) surrounds tightly the holding means (22) of the contact pin (14; 53)..

4. Electromagnetic valve device according to one of the Claims 1 to 3,
**characterized in that** the remaining part of the pin (19; 63), projecting into the socket means (18; 62), forming a plug portion comprises a cross section out-of-round, preferably rectangular.

5. Electromagnetic valve device according to one of the Claims 1 to 4,
**characterized in that** the second sealing (24; 52) is formed by an O-ring seal and preferably is tensed up axially and radially within the magnetic means body (5; 51).

6. Electromagnetic valve device according to one of the Claims 1 to 5,
**characterized in that** the second sealing (24; 52) is situated via a thickening (23) of the contact pin (14; 53) by tenseness within a recess (25) of the magnetic means body (5; 51).

7. Electromagnetic valve device according to one of the Claims 1 to 6,
**characterized in that** the contact pin (14; 53) is formed by a pin, round in cross-section, its one end is crushed for formation of the plug portion (19; 63).

8. Electromagnetic valve device according to one of the Claims 1 to 7,
**characterized in that** on the pestle (28) is disposed an armature (8), which is guided by the piston (27) within the valve means body (26).

9. Electromagnetic valve device according to one of the Claims 1 to 8,
**characterized in that** the pestle (28) and the piston (27) are constructed in one piece with one another.

10. Electromagnetic valve device according to one of the Claims 1 to 9,
**characterized in that** the piston (27) and/or the pestle (28) consist of non-magnetic, preferably metallic material and the magnetic means body (5; 51) consists preferably of plastic.

11. Electromagnetic valve device according to one of the Claims 1 to 10,
**characterized in that** the valve means body (26) is constructed in one piece with a widening (30) which projects into the magnetic means body (5; 51).

12. Electromagnetic valve device according to one of the Claims 1 to 11,
**characterized in that** within the magnetic means body (5; 51) is provided with at least one feedback means (34; 57 to 61), preferably embedded.

13. Electromagnetic valve device according to Claim 12,
**characterized in that** the feedback means (34; 57 to 61) is essentially designed cylinder-shaped and advantageously comprises at its ends flanges (35, 35'), pointing in opposite directions.

14. Electromagnetic valve device according to one of the Claims 1 to 13,
**characterized in that** within the magnetic means body (51) are accommodated a plurality of electromagnetic valves (36 to 40), preferably respectively comprising a feedback means (57 to 61).

15. Electromagnetic valve device according to Claim 14,
**characterized in that** all the feedback means (57 to 61) are embedded within the magnetic means body (51).

## Revendications

1. Configuration de vanne électromagnétique avec une partie de vanne (4; 41 à 45) et une partie magnétique (3, 46 à 50) comprenant un poussoir (28) placé dans une boîte de la partie magnétique (5, 51) et relié à un piston (27) disposé dans une boîte de la partie de vanne (26) reliée à un porteur de fonction (2; 56) auquel est fixée la boîte de la partie magnétique (5, 51) comprenant au moins un raccordement (14; 53) lequel est connecté conductiblement avec un enroulement (12) d'une bobine (6) de la partie magnétique (3, 46 à 50) et avec au moins un joint (31; 54) situé entre ledit porteur de fonction (2; 56) et ladite partie magnétique (3, 46 à 50),
**caractérisée en ce que** le joint (31; 54) est placé dans une cavité (32; 55) du porteur de fonction (2; 56) et que le raccordement est un ergot (14, 53) lequel est étanché par un second joint (24; 52) contre la boîte de la partie magnétique (5, 51) et fait saillie dans une partie de contact (18) de la boîte de la partie magnétique (5, 51).

2. Configuration de vanne électromagnétique selon revendication 1,
**caractérisée en ce que** le joint (31; 54) s'acolle dans la cavité (32; 55) du porteur de fonction (2; 56) à une bride (33) de la boîte de la partie magnétique (5, 51), avec laquelle celle-ci est fixée sur le porteur de fonction (2; 56).

3. Configuration de vanne électromagnétique selon revendication 1 ou 2,
**caractérisée en ce que** l'ergot (14, 53) est disposé dans la boîte de la partie magnétique (5, 51) avec une partie de retenue (22), ronde en coupe transversale et qu'avantageusement le second joint (24; 52) entoure la partie de retenue (22) de l'ergot (14;53) d'un façon étanche.

4. Configuration de vanne électromagnétique selon une des revendications 1 à 3,
**caractérisée en ce que** la restante partie d'ergot (19; 63) se dressante dans la partie de contact (18) et formante une section enfichable comprend un coupe transversale en faux-rond, de préférence rectangulaire.

5. Configuration de vanne électromagnétique selon une des revendications 1 à 4,
**caractérisée en ce que** la seconde joint (24; 52) est formée par un anneau torique et est de préférence gauchie axialement et radialement dans ladite boîte de la partie magnétique (5, 51).

6. Configuration de vanne électromagnétique selon une des revendications 1 à 5,
**caractérisée en ce que** la seconde joint (24; 52) est située par un épaississement (23) d'ergot (14;53) sur gauchissement dans un èvidement (25) de ladite boîte de la partie magnétique (5, 51).

7. Configuration de vanne électromagnétique selon une des revendications 1 à 6,
**caractérisée en ce que** l'ergot (14;53) est formé par un goujon rond en coupe transversale, l'une extrémité de cellui-ci étant sertie pour former la section enfichable (19; 63).

8. Configuration de vanne électromagnétique selon une des revendications 1 à 7,
**caractérisée en ce que** sur le poussoir (28) est disposée une armature (8) ladite armature est guidée dans la boîte de la partie de vanne (26) par l'intermédiaire du piston (27).

9. Configuration de vanne électromagnétique selon une des revendications 1 à 8,
**caractérisée en ce que** le poussoir (28) et le piston (27) sont agencés l'un à l'autre d'un seul tenant.

10. Configuration de vanne électromagnétique selon une des revendications 1 à 9,
**caractérisée en ce que** le piston (27) et/ou le poussoir (28) sont en matériau amagnétique de préférence métallique et que la boîte de la partie magnétique (5, 51) est de préférence en matière plastique.

11. Configuration de vanne électromagnétique selon une des revendications 1 à 10,
**caractérisée en ce que** la de partie de vanne (26) est formée solidaire avec un élargissement (30) lequel se projete dans la boîte de la partie magnétique (5, 51).

12. Configuration de vanne électromagnétique selon une des revendications 1 à 11,
**caractérisée en ce que** dans la boîte de la partie magnétique (5, 51) est prévu au moins un moyen de rétroaction (34; 57 à 61), de préférence encastré.

13. Configuration de vanne électromagnétique selon revendication 12,
**caractérisée en ce que** le moins de rétroaction (34; 57 à 61) est pour la plus grande partie de forme cylindrique et comprend avantageusement à ses extrémités des brides (35; 35') indiquant des directions opposées.

14. Configuration de vanne électromagnétique selon une des revendications 1 à 13,
**caractérisée en ce que** dans la boîte de la partie magnétique (5, 51) sont aménagées plusieurs vannes électromagnétiques (36 à 40) chacune comprenant de préférence un moyen de rétroaction (57 à 61).

15. Configuration de vanne électromagnétique selon revendication 14,
**caractérisée en ce que** tous les moyens de rétroaction (57 à 61) sont encastrés dans ladite boîte de la partie magnetique (51).
